# EUROPEAN PATENT APPLICATION

(11) **EP 2 492 837 A1**
(43) Date of publication of application: **29.08.2012**
(21) Application number: 10824782.6
(22) Date of filing: 04.10.2010
(51) Int. Cl.: G06F 21/20, G06F 13/00

(54) **NETWORK COMMUNICATION SYSTEM, SERVER SYSTEM AND TERMINALS**

(30) Priority: 19.10.2009 WO PCT/JP2009/067976
(71) Applicant: Suginaka, Junko, Minato-ku, Tokyo 105-0001 (JP)
(72) Inventor: FURUKAWA Yoshihisa, Tokyo 102-0094 (JP)
(74) Representative: Müller - Hoffmann & Partner
(86) International application number: PCT/JP2010/067349
(87) International publication number: WO 2011/048933

(57) **Abstract**

A network communication system includes a network (7), a system of authentication servers (5), and a terminal (1). The system of the authentication servers includes a plurality of servers (501, 502) that execute a predetermined process in response to an authentication request from the terminal (1). The terminal (1) includes a connection destination list storage unit (43) that stores information concerning a preset prioritized connection order of connection with the server, fault determining means (204) that, when an authentication request is made to the server, determines whether a traffic fault occurs on the server, and priority order setting means (203) that, if the fault determining means determines that a traffic fault occurs on the server, changes connection to a next server in accordance with the connection order. The server performs an authentication process as much as possible even while the server is under a DOS/DDOS attack.

## Description

### Technical Field

The present invention relates to a network communication system including a server connected to a network, a terminal connected to the network, and having a predetermined connection authority to the server, a server system, and the terminal.

### Background Art

With rapid advances in communication networks including the Internet, services including a variety of business transactions are performed via the communication networks today. Similarly, services such as administrative procedures at administrative organizations are performed via the communication networks. When such services are provided, information exchanged via the network typically includes important information, such as payment information, transaction information, private information, and the like. Therefore, an authentication operation is performed on a terminal and a person who receives services in order to control identity fraud, and an information communication process is thus appropriately performed.

When an authentication process is performed by a server or the like, the server can be a target of DOS/DDOS (Distributed Denial of Service) attack. If the server is under a DOS/DDOS attack, i.e., under a DOS attack or a DDOS attack, a process workload on the server may increase, and may not smoothly respond to a service request from an authorized terminal. Known as the DOS/DDOS attacks are mainly a syn·flood attack, a TCP-Connection-flood attack, and a HTTP·GET·flood attack. In the syn·flood attack, a large number of syn packets meaning the call of a TCP connection are sent to an attack target to force the server as the attack target to perform a high amount of preparation process, i.e., to give the server a tremendous amount of workload. In the TCP·Connection·flood attack, only a large-size TCP connection is performed such that no communications are performed in practice, and the server as the attack target is invited to use resources thereof only to maintain that TCP connection. In the HTTP-GET-flood attack, an actual HTTP·GET command is sent to the server as the attack target such that the server is forced to perform a large amount of returning process of contents. Workload is thus imposed on the server itself, and a band of a line connected to the server in a direction looking in the Internet is consumed in vain.

Patent Literature 1 describes methods of detecting an attack that has sent a large number of packets to a particular server or network to render the server or network inoperable. In one of the described methods, a node located close to a protection target such as a server monitors a queue of each interface, and a flood of a large number of queues, if created, is detected as an attack. In one of the described methods, if a state that a packet quantity per flow is excessively larger than a threshold value of a predetermined traffic amount continues, a node located close to a protection target detects the state as an attack. In one of the described methods, a node observes an amount of traffic on a per destination network address basis, and if an abnormal amount is caused among the traffic amounts, the node detects the abnormal amount as an attack.

Patent Literature 2 discloses an unauthorized access arrival denial technique that controls effects an authorized user suffers from. According to the disclosed technique, a protected item covered with an unauthorized access prevention step and an unprotected item not covered with such a step are displayed on screen in a manner that distinctly discriminate one item from the other. A system administrator is thus assisted to provide an instruction in response to an error as to whether to execute an authorized access prevention step, wherein the error is caused by an erroneous operation in an unauthorized access detection of IDS (Intrusion Detection System).

### Citation List

### Patent Literature

Patent Literature 1 Japanese Unexamined Patent Application Publication No. 2005-323183
Patent Literature 2 Japanese Unexamined Patent Application Publication No. 2010-33596

### Summary of Invention

### Technical Problem

Patent Literature 1 describes a detection method of detecting the presence or absence of an attack to a particular server, but fails to describe how to provide communications for an authorized user under attack. Patent Literature 2 describes a technique that displays a monitor screen to prompt a system administrator to provide a solution in order to control effects an authorized user suffers from when an unauthorized access is detected. However, Patent Literature 2 fails to describe a technique of how to protect an authorized user from an adverse effect as much as possible if the presence or absence of an unauthorized access has been detected.

It is an object of the present invention to provide a network communication system, a server system and a terminal, each of which assures an authorized user that a server is available as much as possible even while the server is under attack.

### Solution to Problem

A network communication system of the present invention includes a server system connected to a network, and a terminal connected to the network, and having a predetermined connection authority to the server system. The server system includes a plurality of servers, each server having a different IP address set thereto, and performing a predetermined process in response to a connection request from the terminal 1. The terminal includes a connection destination list storage unit that stores information concerning a preset prioritized connection order of connection with the server, fault determining means that determines whether a traffic fault occurs on the server when a connection request is made to the server, and priority order setting means that changes connection to a next server in accordance with the connection order if the fault determining means determines that a traffic fault occurs on the server.

According to the present invention, the terminal may be connected to the server system via the network. When a connection request, typically, an authentication request, is made to the server, the fault determining means of the terminal determines whether a traffic fault occurs on the server. If the fault determining means determines that a traffic fault occurs on the server, the priority order setting means changes connection to the next server in accordance with the connection order stored on the connection destination list storage unit. If it is determined that the server is under an attack, such as DOS or DDOS, via the network and considered to be in an irregular traffic state, the terminal changes the authentication server from the current server to another server in accordance with the predetermined connection order. Appropriate connection, typically authentication, becomes feasible in much wider range.

### Advantageous Effects of Invention

According to the present invention, an authorized user is assured that the user uses the server as much as possible even while the server is under the DOS/DDOS attack.

### Brief Description of Drawings

FIG. 1 diagrammatically illustrates a configuration of a network communication system as one embodiment of the present invention.
FIG. 2 illustrates an example of a hardware configuration of a terminal processor, and a particular AP processor in a terminal, and a USB memory.
FIG. 3 illustrates systemized authentication servers arranged over the network in accordance with a first embodiment.
FIG. 4 is a block diagram illustrating an example of a lower-layer server.
FIG. 5 is a block diagram illustrating an example of an upper-layer server.
FIG. 6 is a flowchart illustrating an example of an authentication request process executed by a CPU of the terminal.
FIG. 7 illustrates systemized authentication servers arranged over a network in accordance with another embodiment.
FIG. 8 is a flowchart illustrating an authentication server determination process executed by the CPU of the terminal on the systemized authentication servers as illustrated in FIG. 7.
FIG. 9 is a flowchart illustrating an example of information exchanging between servers executed by a CPU of a server 511 at a first layer of FIG. 7.

### Description of Embodiments

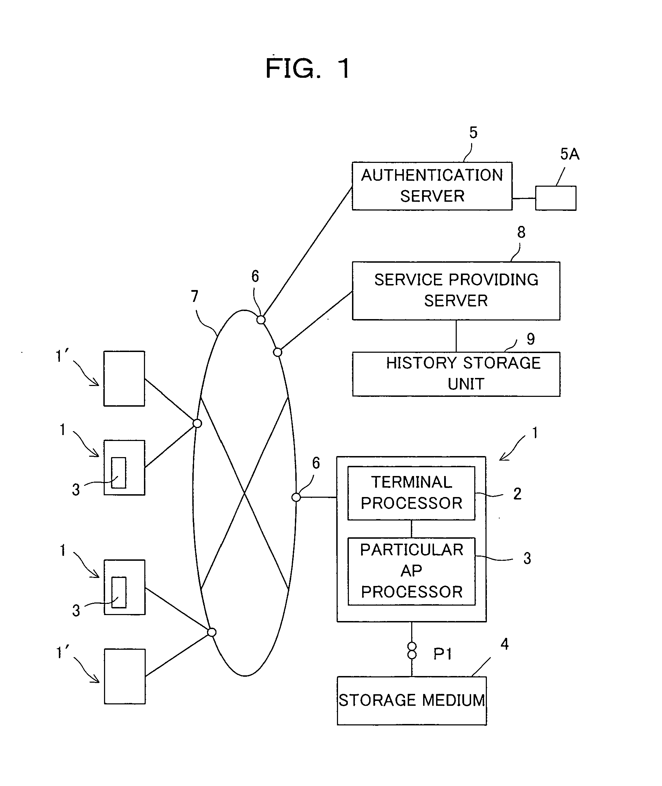

FIG. 1 diagrammatically illustrates a configuration of a network communication system as one embodiment of the present invention. The network system of FIG. 1 includes terminals 1 installed at or held (owned) by members, including individuals, and corporations including a variety of organizations, an authentication server 5 that authenticates (verifies) the terminal 1 and the member using the terminal 1, and a service providing server 8 that transmits information used to provide a variety of services among the terminals 1 authenticated by the authentication server 5.

The terminal 1 is typically a personal computer having a CPU (Central Processing Unit). The terminal 1 includes a terminal processor 2, and a particular application (hereinafter referred to as AP) software processor 3. The terminal processor 2 executes a general application software program (hereinafter referred to as referred to as general AP) to create, process, and store information using a software program for producing a document and drawings, and to perform a typical process, such as transmitting and receiving information using a communication software program. The particular AP processor 3 executes a particular application software program (hereinafter referred to as particular AP) to be discussed later.

More specifically, the particular AP processor 3 in the terminal 1 applies to information communications with the service providing server 8, for example, information communications with public or quasi-public organizations including a private organization (such as national and municipal bodies, associates, and unions), which create, store, and manage secret information. Contemplated as information communications with a terminal outside the organization are issuing a variety of certificates including a certificate of residence, and transmission of application forms.

In another contemplated application, the particular AP processor 3 uses the service providing server 8 to produce and communicate documents related to buying or selling of products and services, asking for cost estimate of and billing charge for products and services, and payment and money received. More specifically, the terminal 1 performs communications via the service providing server 8 on condition that the terminal 1 is authenticated by the authentication server 5. The communications are related to settling typical business transactions, issuing a bill from a store, receiving a bill from a store, issuing an instruction sheet to transfer money from a buyer to an account of a banking institution of a bill issuer (i.e., payment), issuing a receipt of the money, and performing a transmission and reception process in a variety of digital documents of a business transaction regardless of whether the business transaction is performed in electronic settlement. The terminal 1 can produce a variety of documents in an electronic file in text format or binary format. An original electronic file may be stored on the service providing server 8, for example, and the terminal 1 may receive the electronic file from the service providing server 8. The terminal 1 at a banking institution from among the corporations has a particular application software program installed thereon. The particular application software program performs a settlement instruction process (an instruction to perform a settlement process between the banking institutions and the like) in accordance with a banking settlement document from the terminal 1 of the consumer or the corporation.

The terminal 1 has a USB port P that permits a portable recording medium such as a USB (Universal Serial Bus) memory 4 to be loaded thereon (connected thereto). Used as the recording media may include, besides the USB, a stick-like hardware element complying with IEEE1394 port, PCI (Peripheral Component Interconnect), and an external device having at least an information storage section. The recording medium preferably includes a CPU that executes a predetermined process to transfer internal storage information to the terminal 1.

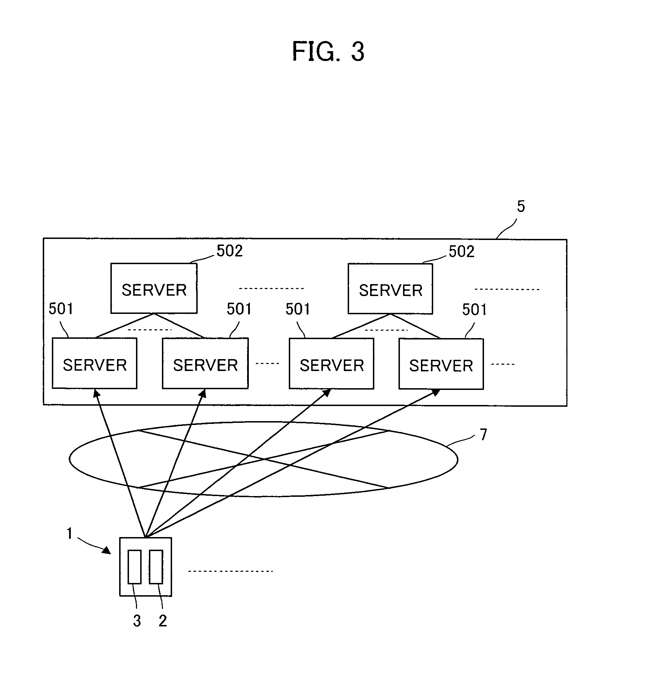

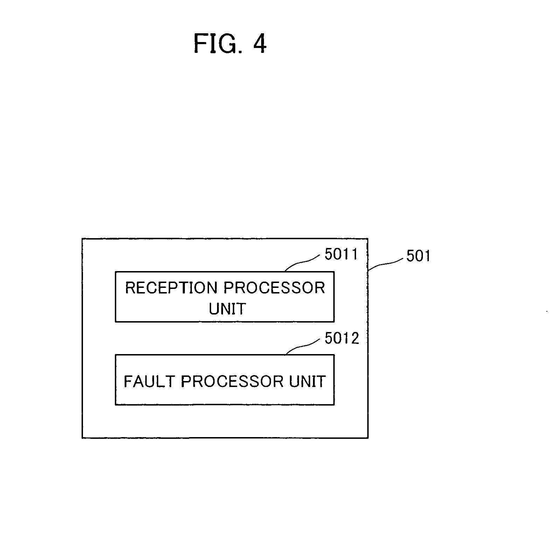

The authentication server 5 includes and uses a member information storage unit 5A for an authentication process. The member information storage unit 5A stores a variety of information related to each member owns the storage medium 4, including member information such as the name, alias, mail address, and address of the member, checking information for authentication, and the like. Part or whole of these pieces of information are also stored on the USB memory 4. In the embodiment, the authentication server 5 is included in an authentication server system of a plurality of servers as illustrated in FIG. 3. Each time a file is exchanged between members, i.e., each time a service is provided, a history storage unit 9 stores the history of provided services and file types on a per member basis for management. The authentication server 5 is further described below with reference to FIGS. 3 and 4.

As illustrated in FIG. 1, the terminal 1 is connected to a network 7 via a provider (ISP) 6. A plurality of the terminals 1 are connected to the ISP 6. Moreover, servers of an appropriate number, each having a Web site providing a variety of information, are also connected to the ISP 6, although not illustrated in FIG. 1. The terminals 1 connected to the ISP 6 include a terminal 1 having the particular AP processor 3 installed thereon and an ordinary terminal 1' having no particular AP processor 3 installed thereon. With the USB memory 4 loaded on the terminal 1, the particular AP processor 3 reads given information from the USB memory 4, transmits the read information to the authentication server 5, and controls the execution of a particular application software program after successful authentication. The system employs the Internet as a network in terms of hardware. More specifically, each terminal 1 is connected to the Internet, but a particular AP program with the security thereof assured using software is permitted to be executed over the Internet as described below. From the standpoint of the network that is isolated using software in accordance with the present invention, the system may be handled as an exclusive network different from the Internet. In this way, a system free from the need to build a new infrastructure may be implemented. And, as necessary, the terminal 1 may be connected to another personal computer via the Internet, as is known, for ordinary information communications, Web site search, browsing, and information retrieval over the Internet.

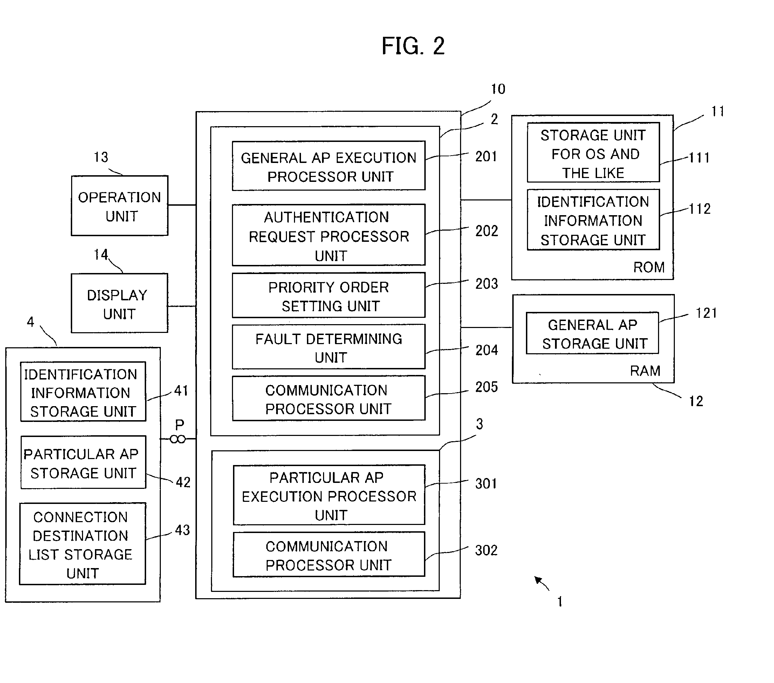

FIG. 2 illustrates an example of a hardware configuration of the terminal processor 2 and the particular AP processor 3 in the terminal 1, and the USB memory 4. As illustrated in FIG. 2, the terminal 1 includes a controller 10 having a CPU. The controller 10 is connected to ROM (Read Only Memory) 11, and RAM (Random Access Memory) 12. The controller 10 performs a program to be discussed below, thereby functioning as the terminal processor 2 and the particular AP processor 3. The controller 10 is also connected to an operation unit 13 including a keyboard, a mouse, and the like, and a display unit 14 displaying an image and including a CRT, liquid-crystal display, a plasma display, or the like.

The ROM 11 includes the storage unit 111 for OS and the like storing a program such as OS, and an identification information storage unit 112 storing identification information to identify the terminal 1. The RAM 12 includes a general AP storage unit 121 that stores a general AP. The general AP is a software program that is needed for the terminal 1 to execute a document creation software program or a general information process such as a browser. The RAM 12, as is known in related art, has a storage area that stores a file produced using the operation unit 1 and other processed contents. A storage instruction may be provided to store part of the content once stored on the storage area, if the part of the content is to be stored permanently. The part of the content is thus stored on an unillustrated hard disk or the like as is known in related art.

The terminal processor 2 in the controller 10 operates as general AP execution processor unit 201, authentication request processor unit 202, priority order setting unit 203, fault determining unit 204, and communication processor unit 205, when a CPU executes a program read onto the RAM 12. The general AP execution processor unit 201 performs a process under the control of a variety of general APs in response to operation content from the operation unit 13. The authentication request processor unit 202 requests the authentication server 5 to perform an authentication process in response to the loading of the USB memory 4 onto the terminal 1 as described below. The priority order setting unit 203 sets which one of the plurality of authentication servers 5 to request to perform an authentication process. The fault determining unit 204 determines whether any fault, such as a connected authentication server 5 being under a current DOS/DDOS attack, occurs. The communication processor unit 205 exchanges information with another terminal 1, another terminal 1', and a Web server via the Internet. The particular AP processor 3 in the controller 10 operates as particular AP execution processor unit 301 and communication processor unit 302, when a CPU executes a program read onto the RAM 12. The particular AP execution processor unit 301 performs a process under the control of a variety of particular APs in response to operation content from the operation unit 13. The communication processor unit 302 communicates with the authentication server 5, the service providing server 8, the history storage unit 9, or another terminal 1 using a communication function of the particular AP, after the authentication processing succeeded.

The USB memory 4 includes identification information storage unit 41, particular AP storage unit 42, and connection destination list storage unit 43. The identification information storage unit 41 stores information identifying own USB memory 4. The particular AP storage unit 42 stores the particular AP. The connection destination list storage unit 43 stores a list of servers (addresses) indicating as connection destinations the connection order of the systemized authentication servers to be discussed below. The USB memory 4, when loaded on the terminal 1, responds to a session signal from the terminal 1. Identification information is read onto the terminal 1 from the identification information storage unit 41 and an address list is read from the connection destination list storage unit 43 onto the terminal 1. The read information is used for an authentication process. Also, the particular AP is read from the particular AP storage unit 42. The particular AP is read onto the RAM 12 of the terminal 1, and subsequent to a successful authentication, the particular AP execution processor unit 301 executes the particular AP for processing the electronic transaction service, the administrative services, and the like.

FIG. 3 illustrates systemized authentication servers arranged over the network according to a first embodiment. The systemized authentication servers have a layer structure composed of two layers of an upper layer and a lower layer. The layer structure is tree-like and includes lower-layer servers 501, which are EEP server serving as a front stage of the authentication process directly connected to a network 7, and servers 502 arranged at the upper layer for authentication. Each server 502 may read information from the member information storage unit 5A. According to the embodiment, a plurality of servers 501 are allocated to one server 502 in a tree-like structure. The ratio of the servers 501 to the servers 502 is optional. For example, the ratio of the server 501 to the server 502 may be 2 to 1, 3 to 1, and so on.

In the embodiment, the terminal 1 accesses one of the authentication servers 501 at the first layer, and is not permitted to directly access a server 502 at the second layer. This is because the terminal 1 specifies the servers 501 at the first layer using respective global IP addresses via the network 7. On the other hand, the server 502 at the upper layer are permitted to access only the servers 501 using MAC addresses thereof. As a result, the servers 5 at the upper layers are not directly attacked via the network 7. Optionally, the servers 501 and the servers 502 are linked via LAN (Local Area Network).

Which server 501 the terminal 1 of the member is to be connected to is set in advance as a priority order by the connection destination list storage unit 43 in relation with the USB memory 4 of each member. The priority order is set in view of an amount of traffic to each server 501 and mainly the number of DOS/DDOS attacks. In such a case, the global IP address having the top priority is set first, and then, the global IP addresses of the servers 501 are modified successively in the priority order below the top priority as necessary. In this way, the use of a large number of servers 501 at the lower layer increases attack resistance, thereby dispersing workload against an attack. By changing the server 501 as a connection destination as appropriate, the system responds to the authentication request as much as possible.

FIG. 4 is a block diagram illustrating an example of the lower-layer server. The lower-layer server 501 includes reception processor unit 5011 and fault processor unit 5012. The reception processor unit 5011 receives an authentication request from the terminal 1 as a precondition to receiving a service, and relays information between the upper-layer server 502 and the terminal 1 for the authentication process. The fault processor unit 5012 performs a measurement process of traffic related to an unauthorized access from the outside via the Internet, and the DOS/DOSS attack, and preferably performs an attack control process, a transmission source tracking process, and the like.

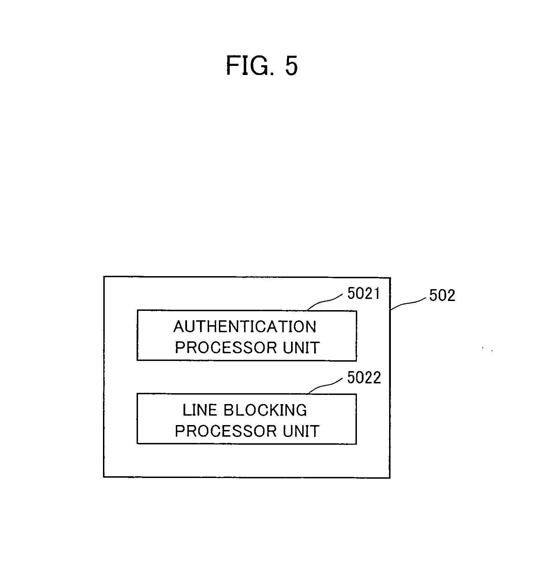

FIG. 5 is a block diagram illustrating an example of the upper-layer server. The upper-layer server 502 includes authentication processor unit 5021 and line blocking processor unit 5022. The authentication processor unit 5021 performs a legitimacy determination process of the authentication request by checking predetermined information transmitted from the terminal 1 at the authentication request against information regarding the member and other information stored on the member information storage unit 5A. The line blocking processor unit 5022 blocks the connection to the lower-layer server 501 for a predetermined period of time if it is determined that there is a possibility that the system suffers from damage as a result of an increase in the attack count to the connected server 501. If terminal identification information is transmitted to the server 502 from the identification information storage unit 112 and USB memory identification information (identifying each member) from the identification information storage unit 41 is transmitted to the server 502, the authentication processor unit 5021 checks these pieces information transmitted to the server 502 against corresponding information stored in advance on the member information storage unit 5A, and determines a difference between the two pieces of information. Upon receiving the authentication request transmitted via the server 501, the authentication processor unit 5021 performs the checking process. If these pieces of information match each other, the authentication processor unit 5021 returns a response signal indicating an authentication success to the terminal 1 as a transmission source via the server 501. If these pieces of information fail to match, the authentication processor unit 5021 returns a response signal indicating an authentication failure to the terminal 1 as the transmission source via the server 501.

Moreover, the server 501 may not take any special effective step against attacks as if the server 501 is in tacit agreement to an exposed state to the attacks. It looks as if the server 501 invited the attacks thereto and helped the other lower-layer servers 501 to receive the authentication request from the terminal 1 more easily.

During the attack, the corresponding upper-layer server 502 protects itself through the blocking process of the line blocking processor unit 5022. The line blocking processor unit 5022 resumes operation at predetermined time intervals to determine whether a fault continues. If the fault state still continues, the line blocking processor unit 5022 performs the blocking process again. In one example, the line blocking may be implemented in software or in hardware. For example, the server 502 includes a firewall at the side thereof facing the corresponding server 501, sets address (IP address), protocol, port number, and content filtering alone or in combination at the firewall, and then blocks communications with the server 501.

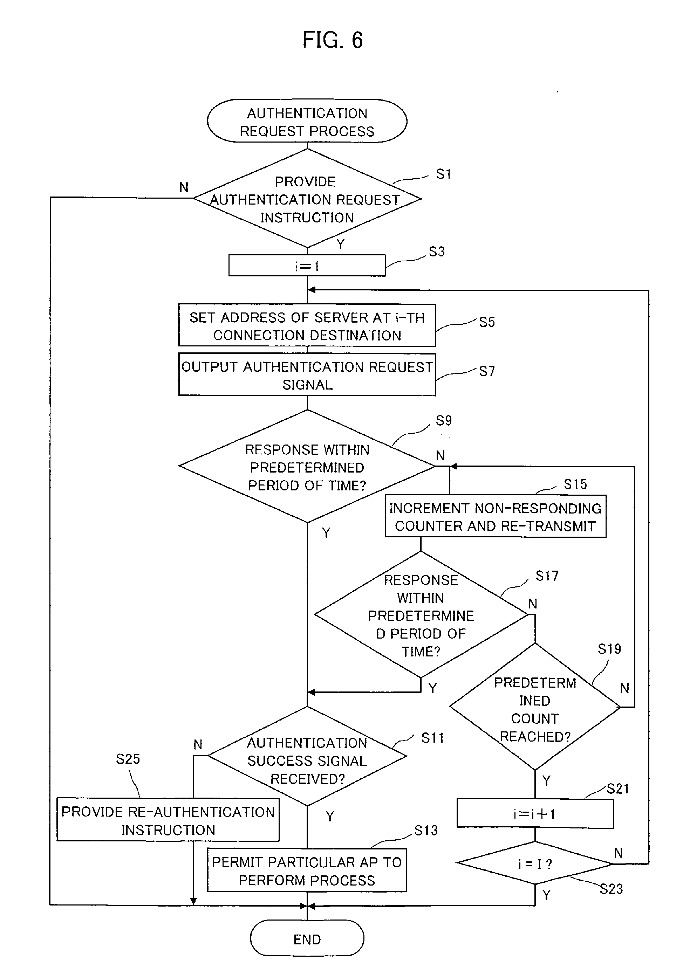

FIG. 6 is a flowchart illustrating an example of an authentication request process executed by the CPU of the terminal 1. When the USB memory 4 is loaded onto the terminal 1, the terminal 1 detects the loading of the USB memory 4 and provides an authentication request instruction (step S1). When the authentication request instruction is provided, a parameter i indicating the setting order of the server 501 serving as a connection destination of the terminal 1 is set to be i = 1 (step S3). Set next in a header region of a packet performing an authentication request is a first address in the list indicating the order of the connection destination and stored on the connection destination list storage unit 43 of the USB memory 4 (step S5). An authentication request signal is output to the server 501 having the set address (step S7).

The CPU of the terminal 1 determines whether a response signal is returned within a predetermined period of time measured by an internal timer (step S9). If an attack load is in an excessive state, the server 501 is considered to be unable to perform a response process to the authentication request from the terminal 1. More specifically, the server 501 is unable to produce a response signal and to perform a process for returning within the predetermined period of time.

If the response signal is a signal indicating the authentication success (step S11), the CPU of the terminal 1 receives an authentication success signal, and permits the particular AP of a service providing request to produce a file. The CPU of the terminal 1 then outputs the produced file (or a file produced in advance) to the service providing server 8, more specifically, the CPU of the terminal 1 outputs the produced file via the service providing server 8 (step S13). In another method, the file transmission may be concurrently performed to both the service providing server 8 and the terminal 1 in parallel.

On the other hand, if no response signal has been received in step S9 within the predetermined period of time, the number of no-responses is counted, and the same signal is re-transmitted (step S15). The response signals include signals indicating authentication success and authentication failure, which are expected to be returned when the server 501 responds to the authentication request. The CPU of the terminal 1 also determines whether a response signal has been returned in response to the retransmission within the predetermined period of time (step S17). If a response signal has been received, processing proceeds to step S11. If no response signal has been received, a retransmission counter performs an upcounting operation, and the CPU of the terminal 1 determines from the count value whether the count of the retransmission operations has reached a predetermined count (step S19). If the count value of retransmissions is less than the predetermined count, processing returns to step S15 to repeat the retransmission operation. On the other hand, if the count value indicating the retransmission count reaches the predetermined count, the CPU of the terminal 1 performs a change process of the connection destination in accordance with i = i + 1 (step S21). Then, the CPU of the terminal 1 determines whether i = I (step S23). In this case, the CPU of the terminal 1 determines that the attack continues, and that the connection with the server 501 is difficult. The parameter I is the number listed in the list and preset in advance. For example, in one example that permits changing to be performed up to four servers 501, I = 5. In another example, all the servers 501 are set in the connection destination list. The connection destination order may be randomly set by a computer of an unillustrated registration processing device (i.e., a device that registers specific information on the USB memory 4 provided to each member during member registration) when the connection destination order is registered on the connection destination list storage unit 43.

If i < I, processing returns to step S5, where the same authentication request process is repeated with the current server changed to the next server 501. On the other hand, if i = I, reception of the authentication request itself is considered to be impossible, and the process ends.

If it is determined in step S11 that the received signal is not a signal indicating authentication success, i.e., that the received signal is a signal indicating authentication failure, the CPU of the terminal 1 notifies the display unit 14 of a resetting instruction for the authentication request (step S25). For example, the resetting instruction is an instruction to re-load the USB memory 4 onto the port P.

The terminal 1 sets as a condition to change the server 501 an overload state in which the attack makes it difficult for the server 501 to return the response signal in reply to the authentication request. On the other hand, the condition to change the server 501 may be another setting described below. More specifically, the server 501 in an overload state measures at least one of a plurality of factors including traffic, the number of attacks, attack frequency, and other factors. And then, if the server 501 determines from the measurement results that the server 501 currently has difficulty in responding to the authentication request from the terminal 1 (for example, by comparing a factor of interest with a predetermined threshold value thereof), the server 501 may transmit a respond disabled signal to the terminal 1. Upon receiving the respond disabled signal, the terminal 1 immediately switch to the next connection destination without performing retransmission determinations of the predetermined number as in step S15.

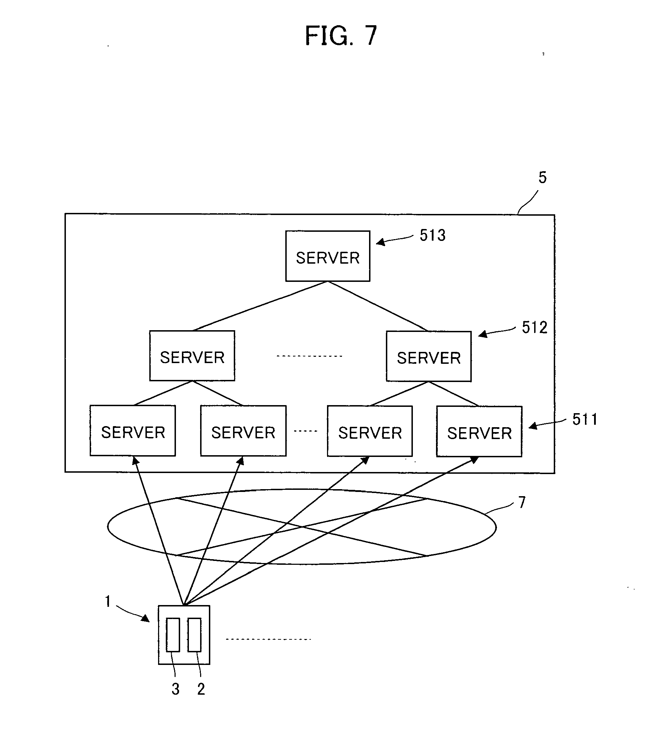

FIG. 7 illustrates another embodiment of systemized authentication servers arranged over the network. The servers 5 at each of the layers are identical in structure to each other in principle. The systemized authentication servers 5 are arranged in a tree structure, and include servers 511 at a first layer as a lower layer directly connected to the network 7, and at upper layers, servers 512 at a second layer, and servers 513 at a third layer. The system in the example here has the simplest structure and includes four servers 511, two servers 512, and one server 513. The present invention is not limited to this structure. The number of servers 511 at the first layer may be any desired number. In addition, two servers at a lower layer may be allocated to one server at an upper layer other than the case that tree or more servers at a lower layer may be allocated to one server at an upper layer. The number of layers may be any number, for example, two, three, four, or more.

In the same manner as in the first embodiment, the terminal 1 accesses one of the servers 511 at the first layer, and is not permitted to directly access a server at the second and third layer. This is because the servers 511 at the first layer are specified by the terminal 1 that sets respective global IP address via the network 7. On the other hand, the servers 512 and 513 at the second or higher layers are linked to only the servers 511 using respective MAC addresses. As a result, the upper-layer servers 512 and 513 at the second or higher layers are not directly attacked via the network 7.

As in the first embodiment, which server 511 the terminal 1 of the member is to be connected to is set in advance as a priority order by the connection destination list storage unit 43 in relation with the USB memory 4 of each member. The priority order may be determined on each combination of the USB memory 4 and the terminal 1 in view of a balance of traffic to each server 511. In such a case, the global IP address having the top priority is set first, and then, the global IP addresses of the servers 511 are set successively in the priority order below the top priority as necessary. In this way, the use of a large number of authentication servers 511 as a server group increases attack resistance, thereby dispersing workload against an attack. The lower-layer server 511 which is set as a first connection destination on the connection destination list storage unit 43 of the USB memory 4, and the upper-layer servers 512 and 513 corresponding to the lower-layer server 511 include a storage unit storing information of a member corresponding to the USB memory 4. More specifically, unlike in the first embodiment, in this embodiment, the member information storage unit 5A is arranged in a distributed fashion in view of the USB memory 4.

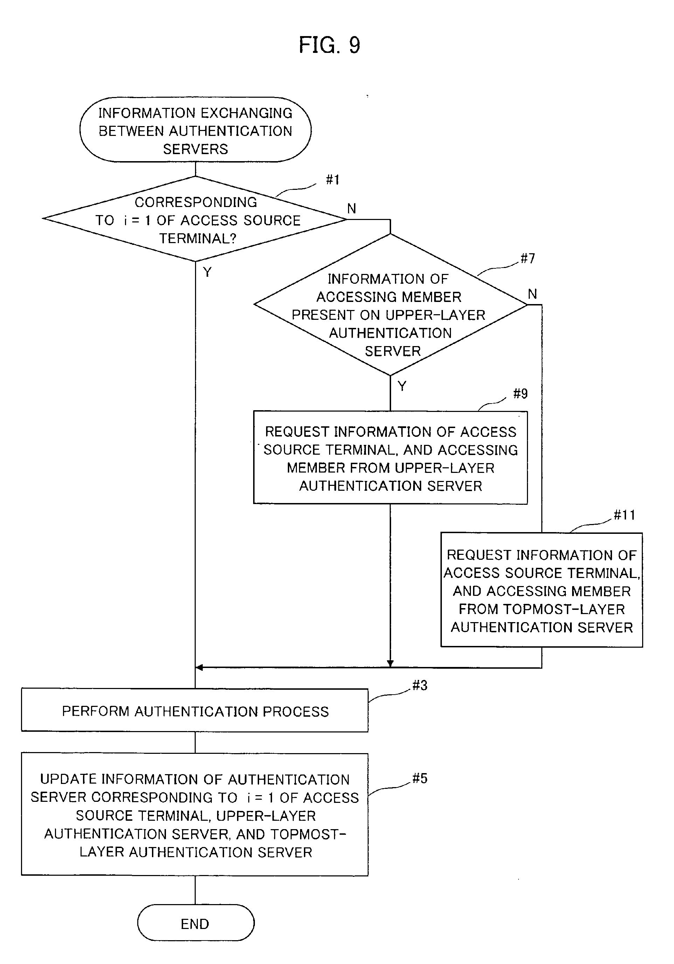

Each of the servers 511 at the first layer as the lower layer includes a CPU. Each server 511 further includes the server 501 of the first embodiment, an element equivalent to the authentication processor unit 5021 of the server 502 of the first embodiment, and a processor unit that exchanges information between servers as illustrated in FIG. 9. The servers 512 and 513 at the second and third layers as the upper layers respectively include CPUs and implement the function of updating data.

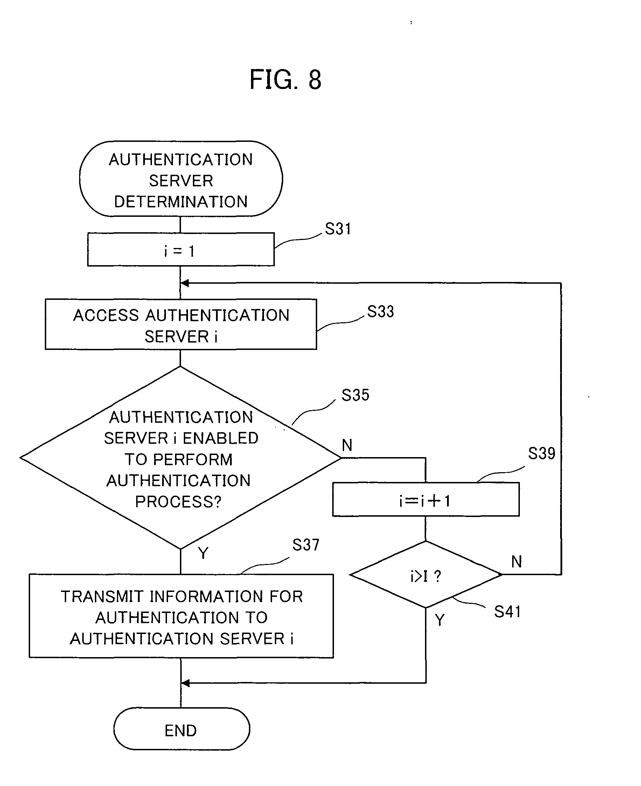

FIG. 8 is a flowchart illustrating an authentication server determination process executed by the CPU of the terminal 1 on the systemized authentication servers as illustrated in FIG. 7. When the USB memory 4 is loaded on the terminal, the authentication process starts. The CPU of the terminal 1 sets i representing the priority order as i = 1 (step S31). Next, the CPU of the terminal 1 accesses the server 511 having the priority order i (step S33). The CPU of the terminal 1 determines whether the server 511 having the priority order i is enabled to perform the authentication process (step S35). More specifically, the CPU of the terminal 1 transmits to the server 511 an authentication request signal for authentication, and waits on standby for a response (a response signal indicating an enabled or disabled state) as to whether the server 511 is enabled or disabled to perform the authentication process. If the server 511 is enabled (YES in step S35), the terminal 1 transmits to the server 511 a specific signal for authentication (step S37). If no response signal has been for a specific period of time, the server 511 is handled as being disabled.

On the other hand, if the response signal indicating the disabled state has been returned in step S35, the CPU of the terminal 1 increments the priority order i by 1 (step S39). The terminal 1 transmits the authentication request signal to the server 511 having the next priority order on condition that the priority order i is not above a maximum number I (NO in step S41). In this way, the terminal 1 makes successively the authentication request in accordance with the priority order. If all the servers 511 at the first layer are not enabled to perform the authentication process (YES from step S41), the terminal 1 ends the process.

FIG. 9 is a flowchart illustrating an example of information exchanging between servers executed by the CPU of the server 511 at the first layer of FIG. 7. The server 511 at the first layer may return a response signal indicating the server 511 being enabled in reply to the authentication request signal from the terminal 1. That server 511 is checked to see if the server 511 corresponds to the priority order i = 1 of the USB memory 4 (step #1). If the server 511 corresponds to the priority order i = 1, the authentication process described above is performed (step #3). After the authentication process, information transmission is performed to update information stored on the server 511, upper servers corresponding thereto (the authentication server 512 at the second layer, and the authentication server 513 at the topmost layer) (step #5). The update information includes authentication history, for example.

On the other hand, if it is determined in step #1 that the server 511 having returned the response signal indicating an enabled state does not correspond to the priority order i = 1 of the USB memory 4, the CPU of the server 511 determines whether information concerning an accessing member, i.e., identification information of the USB memory 4 is present in the corresponding upper server 512 (step #7). It is noted that the authentication request signal transmitted from the USB memory 4 to the server 511 includes a variety of identification information.

If the information of the USB memory 4 is present in the upper-layer server 512, the CPU of the server 511 performs a request process to request the upper-layer server 512 to transmit the identification information of the USB memory 4 (step #9). In response to the information request, the server 511 is enabled to perform the authentication process (step #3). After the authentication process, an information update process is performed on the server 511 having the priority order i = 1 and the corresponding servers 512 and 513 (step #5).

On the other hand, if it is determined in step #7 that the identification information of the USB memory 4 is not present in the upper-layer server 512, the CPU of the server 511 performs a request process to request the topmost server 513 to transmit the identification information of the USB memory 4 (step #11). In response to the information request, the server 511 as an access destination is enabled to perform the authentication process (step #3). After the authentication process, an information update process is performed on the server 511 having the priority order i = 1 and the corresponding servers 512 and 513 (step #55). Through the update process, the authentication process is efficiently performed regardless of whichever terminal 1 the USB memory 4 is loaded on.

The present invention may be embodied in the examples described below.

(1) A personal computer may be used for the terminal 1. Besides a personal computer, another device such as a portable mobile device may be used for the terminal 1. A mobile device, if used, is designed to permit a recording medium such as the USB memory 4 to be loaded thereon.

(2) In the discussion of the embodiments, the terminal 1 is used to authenticate the USB memory 4 appropriately even the server is under attack. The present embodiment is applicable to not only the execution of the authentication process but also the execution of another process (for example, simply for connection).

(3) In the discussion of the embodiments, using the particular AP, the communication processor unit 302 in the terminal 1 communicates with the authentication server 5 after being authenticated successfully, the service providing server'8, the history storage unit 9, and another terminal 1. In one alternative embodiment, NIC (Network Interface Card) and the like may be used in place of the communication processor unit 302 in the terminal 1 and may be mounted in the USB memory 4, and the communication process may be performed via NIC and the like.

(4) According to the embodiments, the service providing server 8 is connected to the network 7 as in a standard example. In an alternative example, the service providing server 8 is connected to the network 7 via the authentication server 5, the authentication server 5 transfers a transmission content from the terminal 1 to the service providing server 8 on condition that the authentication server 5 has been successfully authenticated, and then a service content is returned. In such a case, an authentication process may be requested each time service is provided.

As above, a network communication system of the present invention includes a server system connected to a network, and a terminal connected to the network, and having a predetermined connection authority to the server system. The server system includes a plurality of servers, each server having a different IP address set thereto, and performing a predetermined process in response to a connection request from the terminal 1. The terminal includes a connection destination list storage unit that stores information concerning a preset prioritized connection order of connection with the server, fault determining means that determines whether a traffic fault occurs on the server when a connection request is made to the server, and priority order setting means that changes connection to a next server in accordance with the connection order if the fault determining means determines that a traffic fault occurs on the server. With this arrangement, if the server is under an attack such as DOD/DDOD via the network, and is determined as being in an abnormal traffic state, the authentication server is switched from the current server to another server in accordance with the preset connection order. An appropriate connection, mainly authentication becomes feasible in wide range. More specifically, an authorized user is assured that the server is available as much as possible even while the server is under the DOS/DDOS attack.

Also in the network communication system of the present invention, preferably, the plurality of servers includes a plurality of lower-layer servers connected to the network, and at least one upper-layer server connected to the network via the lower-layer server. The lower-layer server includes relay means that receives an authentication request from the terminal and relays information between the terminal and the upper-layer server. The connection destination list storage unit stores the information concerning the preset prioritized connection order of connection with the lower-layer server. When an authentication request is made to the lower-layer server, the fault determining means determines whether the traffic fault occurs on the lower-layer server. If the fault determining means determines that the traffic fault occurs on the lower-layer server, the priority order setting means changes connection to a next lower-layer server in accordance with the priority order. With this arrangement, even while the lower-layer server is under the DOS/DDOS attack, the upper-layer server performs the authentication process through another lower-layer server as much as possible.

According to the present invention, preferably, the network communication system includes at least a plurality of upper-layer servers, and the lower-layer servers are grouped into a plurality of groups, each group including a plurality of lower-layer servers, and each of the plurality of upper-layer servers is connected to one of the groups. Since this arrangement allows a relatively larger number of lower-layer servers than the number of upper-layer servers to be arranged, load against the attack is appropriately shared.

Also in the network communication system of the present invention, the fault determining means preferably determines that a traffic fault occurs if a response signal has not been received in reply to the authentication request for a predetermined period of time. With this arrangement, the fault determining means determines that the traffic fault occurs even if the server becomes overloaded and is unable to produce the response signal.

Also in the network communication system of the present invention, the lower-layer server preferably includes fault reporting means that returns a reporting signal indicating the traffic fault in reply to the authentication request if the traffic fault is detected, and the fault determining means determines that the traffic fault has occurred wherein upon receiving the reporting signal indicating the traffic fault. With this arrangement, the lower-layer server sends, i.e., returns the traffic fault reporting signal to the terminal in response the detection of the traffic fault. The terminal reliably determines that the traffic fault has occurred.

Also in the network communication system of the present invention, the upper-layer server preferably includes line blocking means that blocks a line with the lower-layer server connected to the upper-layer server if the traffic fault occurs on the lower-layer server. With this arrangement, the upper-layer server is protected by blocking the line.

Also in the network communication system of the present invention, the terminal preferably includes authentication request processing means that provides an authentication request to authenticate an external storage medium if the external storage medium storing information of a holder is loaded on the terminal. With this arrangement, the external recording medium is authenticated each time the external recording medium is loaded on the terminal. For this reason, only when an authorized external storage medium is loaded, a process via the terminal 1, such as an issue request of a certificate, or an electronic business transaction process can be performed.

A terminal of the present invention has a predetermined connection authority and is communicable with each of a plurality of servers connected to a network. The terminal preferably includes a connection destination list storage unit that stores information concerning a preset prioritized connection order of connection with the server, fault determining means that determines whether a traffic fault occurs on the server when a connection request is made to the server, and priority order setting means that changes connection to a next server in accordance with the connection order if the fault determining means determines that a traffic fault occurs on the server. With this arrangement, an authorized user is assured that the server is available as much as possible even while the server is under the DOS/DDOS attack.

According to the present invention, the terminal preferably includes authentication request processing means that provides an authentication request to authenticate an external storage medium if the external storage medium storing information of a holder is loaded on the terminal. With this arrangement, only when an authorized external storage medium is loaded, a process via the terminal 1, such as an issue request of a certificate, or an electronic business transaction process can be performed.

Preferably, a server system of the present invention connected to a network, and communicable via the network with a terminal having a predetermined connection authority, includes a plurality of lower-layer servers connected to the network, and at least one upper-layer server connected to the network via the lower-layer server, wherein the lower-layer server includes relay means that receives a connection request from the terminal and relays information between the terminal and the upper-layer server. With this arrangement, even while one lower-layer server is under the DOS/DDOS attack, the upper-layer server performs the authentication process through another lower-layer server as much as possible.

### Reference Signs List

- 1: Terminal
- 10: Controller
- 2: Terminal processor
- 201: General AP execution processor unit
- 202: Authentication request processor unit (authentication information processing means)
- 203: Priority order setting unit (priority order setting means)
- 204: Fault determining unit (fault determining means)
- 3: Particular AP processor
- 301: Particular AP execution processor unit
- 4: USB memory (external recording medium)
- 41: Identification information storage unit
- 42: Particular AP storage unit
- 43: Connection destination storage unit
- 5: Authentication server (server system)
- 5A: Member information storage unit
- 501, 511: Lower-layer servers
- 502, 512, 513: Upper-layer servers
- 5011: Reception processor unit (relay means)
- 5012: Fault processor unit (fault reporting means)
- 5021: Authentication processor unit
- 5022: Line blocking processor unit (line blocking means)
- 7: Network
- 8: Service providing server
- 9: History storage unit

## Claims

1. A network communication system comprising a server system connected to a network, and a terminal connected to the network and having a predetermined connection authority to the server system,
wherein the server system includes a plurality of servers, each server having a different IP address set thereto, and performing a predetermined process in response to a connection request from the terminal 1, and
wherein the terminal includes a connection destination list storage unit that stores information concerning a preset prioritized connection order of connection with the server, fault determining means that determines whether a traffic fault occurs on the server when a connection request is made to the server, and priority order setting means that changes connection to a next server in accordance with the connection order if the fault determining means determines that a traffic fault occurs on the server.

2. The network communication system according to claim 1, wherein the plurality of servers comprises a plurality of lower-layer servers connected to the network, and at least one upper-layer server connected to the network via the lower-layer server,
wherein the lower-layer server includes relay means that receives an authentication request from the terminal and relays information between the terminal and the upper-layer server, and
wherein the connection destination list storage unit stores the information concerning the preset prioritized connection order of connection with the lower-layer server, the fault determining means determines whether the traffic fault occurs on the lower-layer server when the authentication request is made to the lower-layer server, and the priority order setting means changes connection to a next lower-layer server in accordance with the priority order if the fault determining means determines that the traffic fault occurs on the lower-layer server.

3. The network communication system according to claim 2, comprising at least a plurality of upper-layer servers, wherein the lower-layer servers are grouped into a plurality of groups, each group including a plurality of lower-layer servers, and each of the plurality of upper-layer servers is connected to one of the groups.

4. The network communication system according to one of claims 1 through 3, wherein the fault determining means determines that a traffic fault occurs if a response signal has not been received in reply to the authentication request for a predetermined period of time.

5. The network communication system according to one of claims 2 and 3, wherein the lower-layer server comprises fault reporting means that returns a reporting signal indicating the traffic fault in reply to the authentication request if the traffic fault is detected, and the fault determining means determines that the traffic fault has occurred wherein upon receiving the reporting signal indicating the traffic fault.

6. The network communication system according to one of claims 2 through 5, wherein the upper-layer server comprises line blocking means that blocks a line with the lower-layer server connected to the upper-layer server if the traffic fault occurs in the lower-layer server.

7. The network communication system according to one of claims 1 through 6, wherein the terminal comprises authentication request processing means that provides an authentication request to authenticate an external storage medium if the external storage medium storing information of a holder is loaded on the terminal.

8. A server system connected to a network, and communicable via the network with a terminal having a predetermined connection authority, comprising
a plurality of lower-layer servers connected to the network, and
at least one upper-layer server connected to the network via the lower-layer server,
wherein the lower-layer server includes relay means that receives a connection request from the terminal and relays information between the terminal and the upper-layer server.

9. A terminal having a predetermined connection authority and communicable with each of a plurality of servers connected to a network, comprising
a connection destination list storage unit that stores information concerning a preset prioritized connection order of connection with the server,
fault determining means that determines whether a traffic fault occurs on the server when a connection request is made to the server, and
priority order setting means that changes connection to a next server in accordance with the connection order if the fault determining means determines that a traffic fault occurs on the server.

10. The terminal according to claim 9, comprising authentication request processing means that provides an authentication request to authenticate an external storage medium if the external storage medium storing information of a holder is loaded on the terminal.
